# EUROPEAN PATENT APPLICATION

(11) **EP 1 291 783 A1**
(43) Date of publication of application: **12.03.2003**
(21) Application number: 01203442.7
(22) Date of filing: 07.09.2001
(51) Int. Cl.: G06F 17/30

(54) **Method for creating a database, database created according to said method and system in which such a database is used**

(71) Applicant: Stichting Administratiekantoor RD Beheer, 5013 CD Tilburg (NL)
(72) Inventor: Prawiroatmodjo, Raden Ngabei Djoko Sambodo, 6511 XH Nijmegen (NL)
(74) Representative: Jorritsma, Ruurd

(57) **Abstract**

1. Method for building and maintaining a database, running on a system having a system clock or similar provision, said database comprising one or more files, each comprising a number of records, each record containing one or more fields in which data can be entered, as well as one or more indexes for improving the data access, characterised in that anytime data is entered in a record this data is automatically accompanied by a time mark, based on said clock or other time related reference, said time mark being accurate enough to avoid identical time marks in the database, each record carrying only one time mark.

## Description

The invention relates in the first place to a database comprising one or more files, each comprising a number of records, each record containing one or more fields in which data can be entered. The invention relates furthermore to a database created according to said method and to systems in which such a database is used.

### PRIOR ART

Databases of the above-mentioned type are generally known and are in widespread use.

To maintain an acceptable access time with increasing volume of a database it is generally accepted to use indexing techniques. An index can be compared with the list of words at the end of a book. Such a list comprises words in alphabetical order as well as references added to each word indicating the various records wherein the respective word can be found. If a combination of words is searched for then only the references added to said words have to be compared to find those references added to each of the searched words.

In case of a database each record may have a unique identification number. If the contents of the database is for instance a list of addresses then an index can be created consisting on the one hand of names in alphabetical order and on the other hand, combined with each name, one or more unique record identification numbers of those records which contain the respective name. Searching for a name in the complete database will be very time consuming and is therefore in general not done. A search is performed in the index which through said unique number will rather fast lead to one or more records. In many cases more than one index can be used to shorten the access time.

A disadvantage of using indexes were the rising storage costs. The more indexes, the more storage space is needed to store the indexes. However, storage space has become so cheep these days that this disadvantage is in fact overruled by time.

In all those prior art databases updates are performed by opening a record, changing or adding or deleting the data in one or more fields, and closing and restoring the record in its amended form.

That implies that in all those prior art databases in fact information is lost with every update of a record. This method has grown in the past and gained widespread acceptance bearing in mind amongst others the cost of storage. However as indicated above storage costs hardly play a role nowadays.

### OBJECT OF THE INVENTION

An object of the invention is now to provide a method for improving the value of a database considerably by maintaining information about updates and by providing an ordening system which functions according to the time order in which each of the records of the database including the updates thereof was entered into the database.

### THE INVENTION

In agreement with the invention said object is obtained in a method for building and maintaining a database, running on a system having a system clock or similar provision, said database comprising one or more files, each comprising a number of records, each record containing one or more fields in which data can be entered, as well as one or more indexes for improving the data access, characterised in that anytime data is entered in a record this data is automatically accompanied by a time mark, based on said clock or other time related reference, said time mark being accurate enough to avoid identical time marks in the database, each record carrying only one time mark. Because each entry in the database receives automatically a time mark, and because each record carries only one time mark, any update of any record can only be performed by adding a further record in which the updated data is entered together with a separate different (later) time mark. This will lead to a situation wherein the database may comprise a number of updates from one original each carrying a different time stamp. Sorting those records on the time marks will provide a historical survey of the updates of the respective original record. In many cases such a historical survey will provide answers to questions which otherwise could not be answered. Examples will be provided in the detailed description hereinafter.

It is not inconceivable that a record is requested and updated within the short time span between to succeeding time marks. An example will be provided hereinafter. In that case the various updates of that record will be provided with the same time mark. A solution for said problem would be to use a more detailed time mark (e.g. hours, minutes, seconds, tens of seconds in stead of e.g. only hours, and minutes) but this has the disadvantage that a lot of storage space is occupied by a very detailed time mark whereas such a detailed time mark will only be necessary occasionally. Furthermore even with such a detailed time mark the problem may still occur. It is therefor in agreement with the invention preferred that the time mark is accompanied by a serial number which has a basic value in case there are no other records with the same time mark, and which has a sequentially amended unique value in case there are other records with the same time mark. In other words, if there are no two records with the same time mark, the serial value is in fact useless and has a default value e.g. "0"or is completely absent. However if there are two or more records with the same time mark each record receives a sequentially amended serial number such as "1", "2", "3", etc which makes each record unique.

The combination of time mark and serial number still makes it possible to order all records in a chronological order even if there are records with identical time marks.

A preferred embodiment of the method has the characteristic that anytime data is entered in a record the identification or name of the data entering person or system or another person or system identifying item has to be entered in one of the fields. Practice has proven that by entering at least some sort of personal identification by the person who added an amount of data to the database (or made an update of already present data) faults or errors can be found rather easily afterwards.

A preferred embodiment of the database according to the invention is characterised in that the time mark in combination with the unique serial number is used as one of the indexes for the main search index table and for improving the data access to the database. As already remarked above the indexes improve the data access time. Because the time mark plays an important role in the database it certainly improves the data access properties if the time mark is used for indexing purposes.

It is furthermore preferred that for each record the field which contains the identifying item of said record is used to store the time mark. This considerably simplifies the sorting operation to be carried out if the records are not stored physically in the correct time order.

With respect to the time order it is preferred that within a sub-collection of records all comprising the same identifying item in the respective identifying field, the time mark determines the order of the various records.

The invention not only presents a method to build and maintain databases but also presents databases build by such a method.

A database resulting from a method as described in one of the above indicated embodiments has the characteristic that in at least one of the fields of each record a time mark is present.

Preferably the time mark is stored in that field which also contains the identifying item of the whole record.

Furthermore preferably the records in said database are sorted and ordained according to a) said identifying item and b) the time mark.

The invention is furthermore related to the system used for performing the method. In agreement with the invention such a system is characterised in that the system comprises the necessary provisions to derive a time mark from said system clock and to offer said time mark to the system processor anytime a new record has to be written.

### DETAILED DESCRIPTION

The invention will hereinafter be explained in more detail with reference to a number of examples which are related to different databases.

### Example 1

The first example concerns a medical database which can be used for instance in a hospital as central register in which medical data about all patients of the hospital are stored. The database may comprise a number of files such as:
* an address file containing names and addresses of all patients, still under treatment or treated in the past, and all medical and other staff,
* a medical file containing medical data of all patients, still under treatment or treated in the past, necessary to properly and accurately inform the medical staff,
* an internal room/bed assignment file containing data about which patient occupies which bed during which period.

The abovementioned medical file contains a number of records which each may comprise a number of fields and each field may consist of a number of segments. An example of such a record is the following:

| | |
|---|---|
| Case number | 38721 |
| Time index field | 20010622 15:46 |
| Physical record.nr | 286172 |
| Updated by | Heuvel D, 12041946 |
| Type of record | Medical status record |
| Last Updated at | 22-06-2001 15:46 |
| Field(3) | de Jong |
| Field(4) | Hendrick Cornelius Johannes |
| Field(5) | Male |
| Field(6) | 18-04-1946 |
| Field(16) | Diabetes type 4 found |
| Field(35) | hospitalised immediately today |

The case number can be considered is the co-ordinating number for all records comprising information about this specific case. The time index field can be subdivided into the course year-month-day section and the time mark 15:46. The physical record nr. is a numerical piece of data which is unique for this record and is generated by an independent generator for each new record. No other record has the same physical record nr. The "Udated by" field indicates the originator of this record, in other words who entered the data in the various fields. In this example the record was created or updated by D. Heuvel on 15:46, the time stamp found as time index in the main index field. Said Mr. D. Heuvel has furthermore a personal ID 12041946 which can be used for instance to find his address. In relation to underlying application this is however not relevant. The "type of record" field provide the data to distinguish for instance between Address records, Assignment records, Medical status records etc. This needs no further explanation. The "last updated at" field will be clear without further explanation. Off course the time indication 15:46 in this field has to be identical to the time mark section in the time index field.

The actual subject of this record is a certain Hendrick Cornelius Johannes de Jong, male and born on 18 April 1946. His personal details are found in field(3)...field(6). The record comprises furthermore a large number of fields carrying data of informative nature. Two of these fields, field(16) and field(35) are shown. Field (16) provides information about the type of disorder and field(35) provides information about the treatment to be performed.

Now suppose that one hour and 36 minutes later this record is updated by a person called F. v Brand. In agreement with the invention each record will be maintained in the database as it is and any update will in fact create a new record which will be stored as a separate additional record, although related to the original record. As result of the update the following record is added to the database:

| | |
|---|---|
| Case number | :38721 |
| Time index field | : 20010622 17:22 0005498 |
| Physical recordnr | : 745633 |
| Updated by | :Brand v F, 20011992 |
| Type of record | : Medical status record |
| Last Updated at | : 22-06-2001 17:22 |
| Field(3) | : de Jong |
| Field(4) | : Hendrick Cornelius Johannes |
| Field(5) | : Male |
| Field(6) | : 18-04-1946 |
| Field(16) | : Head injuries traffic accident |
| Field(35) | : First Aid Treatment |

The case number is not changed. This "family number" can be used to retrieve all records which form a "family" of records based on the same original record. The related time index field provides the means for sorting the records in a family in "historical" order, i.e. from the oldest record to the most recent record.

Because this record is added as separate record to the database it carries it's own unique physical record nr. 745633. The "Updated by" field indicates who performed the update, i.e. a person called F. v Brand carrying a personal ID 20011992. The type of record is not changed. The "last updated at" field provides the date and exact time the update was stored in the database (which corresponds with the data in the time index field). Important in this example are the fields field(16) and field(35). The respective contents "Head injuries traffic accident" and "First Aid Treatment" do not coincide with the respective contents "Diabetes type 4 found" and "hospitalised immediately today" of the original record.

Some time later, at 18:11 the record is updated again by D. Heuvel resulting into the addition of the following record:

| | |
|---|---|
| Case number | :387621 |
| Time index field | : 20010622 18:11 |
| Physical recordnr | : 596832 |
| Updated by | :Heuvel D, 12041946 |
| Type record | : Medical status record |
| Last Update at | : 22-06-2001 18:11 |
| Field(3) | : de Jong |
| Field(4) | : Hendrick Cornelius Johannes |
| Field(5) | : Male |
| Field(6) | : 18-04-1946 |
| Field(16) | : Diabetes type 4 found, cured with Abomel 20 mg |
| Field(35) | : Release from Hospital in healthy condition |

The y-m-d section 20010622 of the time index field is now combined with the time mark 18:11 and a new physical recordnr is issued by the system.
Because each update in fact creates a separate record it is very easy to recall the complete history of the case. If for instance D. Heuvel asks for a case history of records updated by himself he receives the following information:

| | | |
|---|---|---|
| Case nr 38721 | | |
| Author D. Heuvel | | |
| records of 22-06-2001 | | |
| time 15:46 : | Field(16) | Diabetes type 4 found |
| | Field(35) | hospitalised immediately today |
| time 18:11 : | Field(16) | Diabetes type 4 found, cured with Abomel 20 mg |
| | Field(35) | Release from Hospital in healthy condition. |

From this survey all seems all right. However if D. Heugel asks for a general survey on the case 38721 containing all records irrespective of the author and therefor not restricted to the records created by D, Heuvel but including all records then the following information will be presented:

| | | | |
|---|---|---|---|
| Case nr | 38721 | | |
| Records of 22-06-2001. | | | |
| time 15:46 : | Field(16) | Diabetes type 4 found | D. Heuvel |
| | Field(35) | hospitalised immediately today | |
| time 17:22 : | Field(16) | Head injuries traffic accident | F. v Brand |
| | ..Field(35) | First Aid Treatment | |
| time 18:11 : | Field(16) | Diabetes type 4 found, cured with Abomel 20 mg | D. Heuvel |
| | Field(35) | Release from Hospital in healthy condition | |

It will; be clear to the reader of this survey that something went wrong with the update carried out by F. v Brand.. Diabetes has nothing to do with head injuries caused by an accident.

We will not go into detail looking for the cause of this error. Important is that within the scheme of the invention all updates are maintained each with its own time mark and because of that errors such as described above will always come to light during a later inspection of the case

### Example 2

As indicated above it is preferred according to the invention that the time mark is accompanied by a serial number which has a basic value in case there are no other records with the same time mark, and which has a sequentially amended unique value in case there are other records with the same time mark. An example illustrating the advantage of adding a serial number to the time mark is described in the following paragraphs.

In this example we consider a normal every day situation in the holiday industry. A number of voyage and holiday booking offices are together with offices of the various air carriers connected to a network and through said network to a common database. In this database data is entered about the flights of the air carriers and the passengers on each flight. In the database for each flight a record is present which has the following lay out

| | |
|---|---|
| Flight number | :KL345, London-Amsterdam, 20010417 |
| Time index field | :200103 15 14:33 |
| Booking office | |
| Updated at | 15-03-2001, 14:33 |
| Passenger name | |

If a person with the name THF Klaasen visits the booking office in The Hague and books for this flight a record, made by a booking office in The Hague, will be added to the database carrying amongst others the following data.

| | |
|---|---|
| Flight number | :KL345, London-Amsterdam, 20010417 |
| Time index field | :20010415 15:12 |
| Booking office | The Hague, 347243 |
| Updated at | 200104156, 15:12 |
| Passenger name | Klaasen, THF |

As already said the booking office in The Hague sends this record back to the central; database to be entered as updated record An auxiliary program inspects the database at each entry of a new update and this program discovers that a few seconds ago another record was entered carrying the following data:

| | |
|---|---|
| Flight number | :KL345, London-Amsterdam, 20010417 |
| Time indexed field | :20010415 15:12 |
| Booking office | Rotterdam, 456278 |
| Updated at | 04-15-2001 15:12 |
| Passenger name | Wegemans, GJ |

So if the record from the The Hague booking office would be entered then the database would contain two records with identical time mark which is very inconvenient. To avoid this a serial number is added to both records such that the older record already entered in the database receives the serial number "1" and the second record from the Rotterdam Office receives the serial number "2".

So in the record from the Rotterdam booking office the the time index field is amended into

| | |
|---|---|
| time index field | 20010415 15:12 1 |

In the record from the The Hague office the time index field is amended into

| | |
|---|---|
| time index field | 20010415 15:12 2 |

If a further record is send for instance from a booking office in Utrecht with the same time mark, then after the checking operation a serial number "3 "will be added to the time mark and the following record will be entered:

| | |
|---|---|
| Flight number | :KL345, London-Amsterdam, 20010417 |
| Time index field | :20010415 15:12 3 |
| Booking office | Utrecht, 27825 |
| Passenger name | v Dooren B. |

If thereafter a passenger list is made then the three passengers can be placed on the list in time related order:

| | |
|---|---|
| 15:12 1 | Klaassen THF |
| 15:12 2 | Wegemans GJ |
| 15:12:3 | vDooren B |

If the plane is now overbooked then the logical and fair choice of the person whose booking would be annulled is B v Dooren because he is, measured in time, the last person added to the list. This can be proved without any doubt so that disputes can be prevented.

### Example 3

This is an example originating from the financial accounting practise.
In a shop a database is maintained covering all the sales made during the day. At the end of the day the content of this database is handed over to the financial department together with the contents of the cash register.
To start with it is assumed that the database is maintained in a usual way. Assume a first recording is made at 22-06-2001:

| | | |
|---|---|---|
| Invoicenr. | 78364382A | |
| Date | 22-06-2001 | |
| Debtor ID | StorkPlazaAMS 5643 | |
| Invoice | NLG 6700.00 | |
| Tax | NLG 300.00 | |
| Receivable | NLG 7000.00 | |
| Description | Art.nr 862 Bicycle Locomotief A700 basis | NLG 6000.00 |
| | Art.nr 544 Halogeen lamp special | NLG 500.00 |
| | Art.nr 396 Insurance 3 years | NLG 500.00 |

The same day this record is updated such that it reads:

| | | |
|---|---|---|
| Invoicenr | 78364382A | |
| Date | 22-06-2001 | |
| Debtor ID | StorkPlazaAMS 5643 | |
| Invoice | NLG 6700.00 | |
| Tax | NLG 300.00 | |
| Receivable | NLG 7000.00 | |
| Description | Art.nr 862 Bicycle Locomotief A700 basis | NLG 6000.00 |
| | Art.nr 544 Halogeen lamp special | NLG 500.00 |
| | Art.nr 396 Insurance 2 years | NLG 300.00 |
| | Return payment | NLG 200.00 |

The NLG 200.00 are taken from the cash register and transferred into the pocket of the manipulative (frauduleus) salesperson. The financial department does not receive any clue because only the last updated record will be maintained in the conventional; database.

Now, if a database in agreement with the invention was used then at the end of the day there would be two records reading for example:

| | | |
|---|---|---|
| Invoicenr | 78364382 | |
| Date | 22-06-2001 13:47 | |
| salesperson | F. Lawrence | |
| Debtor ID | StorkPlazaAMS 5643 | |
| Invoice | NLG 6700.00 | |
| Tax | NLG 300.00 | |
| Receivable | NLG 7000.00 | |
| Description | Art.nr 862 Bicycle Locomotief A700 basis | NLG 6000.00 |
| | Art.nr 544 Halogeen lamp special | NLG 500.00 |
| | Art.nr 396 Insurance 2 years | NLG 500.00 |
| | | |
| Invoicenr | 78364382 | |
| Date | 22-06-2001 15:12 | |
| salesperson | F. Lawrence | |
| Debtor ID | StorkPlazaAMS 5643 | |
| Invoice | NLG 6700.00 | |
| Tax | NLG 300.00 | |
| Receivable | NLG 7000.00 | |
| Description | Art.nr 862 Bicycle Locomotief A700 basis | NLG 6000.00 |
| | Art.nr 544 Halogeen lamp special | NLG 500.00 |
| | Art.nr 39 6 Insurance 2 years | NLG 300.00 |
| | Return payment | NLG 200.00 |

If now the financial department requests an overview of all records bearing invoice nr 78364382 it get a survey such as:

| | | |
|---|---|---|
| Invoice | 78364382 | |
| Sales person | F.Lawrence | |
| Date | 22-06-2001 13:47 | |
| Description | Art.nr 862 Bicycle Locomotief A700 basis | NLG 6000.00 |
| | Art.nr 544 Halogeen lamp special | NLG 500.00 |
| | Art.nr 396 Insurance 2 years | NLG 500.00 |
| Date | 22-06-2001 15:12 | |
| Description | Art.nr 862 Bicycle Locomotief A700 basis | NLG 6000.00 |
| | Art.nr 544 Halogeen lamp special | NLG 500.00 |
| | Art.nr 396 Insurance 2 years | NLG 300.00 |
| | Return payment | NLG 200.00 |

From this survey it will clearly come to light that salesperson Lawrence has changed the insurance period from 3 years into 2 years and has simultaneously withdrawn NLG 200.00 from the till. The question if he handed the money over to the buyer or if he put the money in his own pocket can be answered rather easy.

With the method of the invention we see both of the records and see every changes done.

It is remarked that above examples of serial numbers are provided reading ("1, 2, 3, ...). It will be clear that in stead thereof also serial numbers such as ("516, 517, 518 ...) can be used as long as the represent e detectable sequential order.

## Claims

1. Method for building and maintaining a database, running on a system having a system clock or similar provision, said database comprising one or more files, each comprising a number of records, each record containing one or more fields in which data can be entered, as well as one or more indexes for improving the data access, **characterised in that** anytime data is entered in a record this data is automatically accompanied by a time mark, based on said clock or other time related reference, said time mark being accurate enough to avoid identical time marks in the database, each record carrying only one time mark.

2. Method according to claim 1, **characterised in that** the time mark is accompanied by a serial number which has a basic value in case there are no other records with the same time mark, and which has a sequentially amended unique value in case there are other records with the same time mark.

3. Method according to claim 1 or 2, **characterised in that** anytime data is entered in a record the identification or name of the data entering person or system or another person or system identifying item has to be entered in one of the fields.

4. Method according to one of the preceding claims, **characterised in that** the time mark. is used as one of the indexes for improving the data access to the database.

5. Method according to one of the preceding claims, **characterised in that** in case the database is divided into a number of sub databases each running on a different hardware system a system reference is added to the time mark respectively to the combination of time mark and serial number.

6. Method according to one of the preceding claims. **characterised in that** for each record d the field which contains the identifying item of said record is used to store the time mark.

7. Method according to one of the preceding claims. **characterised in that** for each record the field which contains the identifying item of said record is used to store the unique serial number.

8. Method according to one of the preceding claims, **characterised in that** within a subcollection of records all comprising the same identifying item in the respective identifying field, the time mark determines the order of the various records.

9. Method according to claim 8, **characterised in that** within a subcollection of records all comprising the same identifying item in the respective identifying field and all comprising the same time mark in the time mark field, the serial number determines the order of the various records.

10. Database resulting from a method as described in one of the preceding claims, **characterised in that** in at least one of the fields of each record a time mark is present.

11. Database according to claim 10, **characterised in that** in at least one of the fields of each record a unique serial number is present.

12. Database according to claim 9 or 10 **characterised in that** the time mark is stored **in that** field which also contains the identifying item of the whole record.

13. Database according to one of the claims 10-12, **characterised in that** the records in said database are sorted and ordained according to a) said identifying item, b) the time mark.

14. Database according to claim 13, **characterised in that** the records in said database are sorted and ordained according to a) said identifying item, b) the time mark. and a unique serial number.

15. System destined for performing a method as defined in one of the claims 1-9 and for running a database according to one of the claims 10-14, said system comprising a system clock or similar time defining reference, **characterised in that** the system comprises the necessary provisions to derive a time mark from said system clock and to offer said time mark to the system processor anytime a new record has to be written.

16. System according to claim 15, **characterised in that** the system comprises means for detecting the generation of a time mark which is equal to the previously generated time mark and for generating an amended serial number in case of such detection.
